# EUROPÄISCHE PATENTANMELDUNG

(11) **EP 1 036 693 A1**
(43) Veröffentlichungstag der Anmeldung: **20.09.2000**
(21) Anmeldenummer: 00105249.7
(22) Anmeldetag: 14.03.2000
(51) Int. Cl.: B60L 5/20

(54) **Schleifstück für Stromabnehmer**

(30) Priorität: 16.03.1999 DE 29904603 U
(71) Anmelder: Schunk Kohlenstofftechnik GmbH, D-35452 Heuchelheim (DE)
(72) Erfinder: Wiessler, Ulrich, Dr. Dipl.-Physiker, 35578 Wetzlar (DE); Ringleb, Ulrich, Dr. Dipl.-Chemiker, 35415 Pohlheim (DE); Deckwerth, Martin, Dr. Dipl.-Ingenieur, 63538 Grosskrotzenburg (DE); Schäfer, Jürgen, Techniker, 35649 Bischoffen (DE)
(74) Vertreter: Stoffregen, Hans-Herbert, Dr. Dipl.-Phys.

(57) **Zusammenfassung**

Die Erfindung bezieht sich auf ein Schleifstück (10) für Stromabnehmer umfassend einen langgestreckten Träger (14) sowie eine von diesem abgestützte langgestreckte Kohleleiste (12) mit bodenseitig offenem Kanal (18), in dem der Träger eingebracht ist. Um ein problemloses Einbringen des Trägers in das Schleifstück zu ermöglichen, wird vorgeschlagen, dass der Träger ein U-Profil oder C-Profil aus Metall ist, dessen offener Schenkel von einer Innenfläche (50) des im Schnitt rechteckförmigen Kanals verschlossen ist.

## Beschreibung

Die Erfindung bezieht sich auf ein Schleifstück für Stromabnehmer umfassend einen langgestreckten Träger sowie eine von diesem abgestützte langgestreckte Kohleleiste mit bodenseitig offenem Kanal, in dem der Träger eingebracht ist, der ein U-Profil oder ein C-Profil vorzugsweise aus Metall ist mit einem offenen Schenkel, der von der Innenfläche des im Schnitt insbesondere rechteckförmigen Kanals verschlossen ist, und einem geschlossenen von der Kohleleiste unbedeckten Schenkel.

Heutzutage im Einsatz befindliche Schleifstücke bestehen grundsätzlich aus einer aus Kohle bzw. Graphitmischung, aus Kohle und Metall, insbesondere Kupfer, bestehende Kohleleisten, die auf einem aus Metall hergestellten Träger mittels z. B. Verkleben, Löten oder Klemmen befestigt werden. Der Träger wird sodann an einem Stromabnehmerbügel befestigt. Dabei ist darauf zu achten, dass ein guter elektrisch leitender Kontakt zwischen Träger und Kohleleiste gegeben ist, um punktuelle hohe Stromdichten zu vermeiden, wodurch hohe Verluste auftreten und unerwünschte thermische Belastungen der Kohleleiste selbst auftreten könnten.

Ein Schleifstück der eingangs genannten Art mit Kohleleiste mit bodenseitig offenem Kanal ist dem DE 83 13 900 U1 zu entnehmen, in dem ein Träger in Form eines C-Profils verläuft, dessen offener Schenkel von einer Innenfläche des Kanals abgedeckt ist. Der Träger ist als mulden- oder wannenartiger Blechkörper in Form eines Halbrohres mit von diesem ausgehenden im Schnitt quaderförmigen Basisabschnitten ausgebildet. Mit dem nach innen abgewinkelte Falze aufweisenden Basisabschnitt wird der Träger mit der die Geometrie eines abgeflachten Halbkreisprofils aufweisenden Kohleleiste verlötet. Der Träger überragt mit dem Halbrohr vollständig die Unterseite der Kohleleiste, so dass Instabilitäten in Bezug auf die Befestigung auftreten können.

Bei einem Schleifstück nach der DE 195 29 169 A1 ist die Kohleleiste mit rohrförmigem, U-förmigem oder C-förmigem Querschnitt ausgebildet und umschließt einen in ihrer Längsrichtung verlaufenden Hohlraum an mindestens drei Seiten, wobei der in dem Hohlraum angeordnete Träger an mindestens drei Längsseiten von der Kohleleiste bedeckt ist. Der Träger wird dabei grundsätzlich in den Hohlraum der Kohleleiste eingeschoben. Zur sicheren Verbindung und gutem elektrisch leitenden Kontakt ist der Träger als längsgeschlitztes Hohlprofil mit Übermaß relativ zum Querschnitt des Hohlraums ausgebildet, wobei der Träger beim Einschieben in den Hohlraum zusammengedrückt und anschließend losgelassen wird, so dass ein Aufweiten des Trägers und somit ein flächiges Anlegen an den Hohlraum der Kohleleiste erfolgt. Hierdurch bedingt können jedoch in der Kohleleiste Spannungen aufgebaut werden, die zu einem vorzeitigen Bruch führen.

Alternativ kann in den Hohlraum Aluminiumschaum eingebracht werden, der unter Ausnutzung der Blähwirkung eines Treibmittels an die Innenwand des Hohlraums angeformt wird. Auch hierdurch besteht die Gefahr eines unerwünschten Spannungsaufbaus in der Kohleleiste.

Der vorliegenden Erfindung liegt das Problem zu Grunde, ein Schleifstück der zuvor beschriebenen Art so weiterzubilden, dass ein problemloses Einbringen des Trägers in das Schleifstück möglich ist, wobei gleichzeitig eine sichere Befestigung zwischen Schleifstück und Träger gewährleistet sein soll. Auch soll das Schleifstück bei geringem Gewicht eine hohe Stabilität aufweisen.

Erfindungsgemäß wird das Problem im Wesentlichen dadurch gelöst, dass das Profil mit seinem von der Kohleleiste unbedeckten Schenkel bündig oder im Wesentlichen bündig zur bodenseitigen Fläche der Kohleleiste verläuft.

Abweichend vom vorbekannten Stand der Technik besteht das Schleifstück aus vorgefertigten Teilen in Form der Kohleleiste mit einem bodenseitig offenen, im Schnitt insbesondere rechteckförmigen, vorzugsweise quadratischen Kanal sowie einem U- oder C-Profil, welches allein an zwei Längsseiten von der Kohleleiste bedeckt ist. Des Weiteren weist das Profil eine Umhüllende mit vorzugsweise parallel zueinander verlaufenden Längsseiten auf, deren Abstand gleich der Breite des insbesondere rechteckförmigen Kanals in der Kohleleiste ist. Somit ist es nicht erforderlich, dass der Träger in Längsrichtung der Kohleleiste eingeschoben wird. Vielmehr kann das Schleifstück auf das Profil quasi aufgedrückt werden, wodurch eine einfache Montage und Sicherung möglich ist. Dabei wird das Profil vollständig oder nahezu vollständig von der Kohleleiste aufgenommen, so dass sich eine überaus stabile, gleichwenn einfache Konstruktion ergibt.

Selbstverständlich kann der Kanal und damit der Träger einen anderen Querschnitt wie z. B. trapezförmigen Querschnitt aufweisen, wobei jedoch die Möglichkeit eines "Hineindrückens" in den Kanal sichergestellt sein sollte.

Durch die Verwendung des U- oder C-Profils ergeben sich Materialeinsparungen des Trägers, ohne dass die Stabilität des Schleifstücks selbst Einbußen hinnehmen muss. Auch muss aufgrund der hohen Fertigungsgenauigkeiten grundsätzlich eine elektrisch leitende Schicht zwischen Kanalwandung und Träger nicht vorgesehen werden, da ein passgenaues Einbringen des Trägers in den Kanal möglich ist. Eine Weiterbildung der Erfindung sieht vor, dass in dem Kanal innenseitig eine elektrisch leitende Schicht ausgebildet oder aufgebracht ist. Insbesondere kann die Schicht wie Kupferschicht galvanisch oder durch Spritzen aufgebracht sein.

In Weiterbildung der Erfindung kann das Profil mit der Kohleleiste vorzugsweise durch Kleben, Löten oder Schweißen verbunden sein. Bevorzugterweise ist jedoch vorgesehen, dass das Profil durch Ultraschallschweißen mit der Kohleleiste verbunden wird. Hierzu kann das Profil in seinem bündig oder nahezu bündig zur Bodenfläche der Kohleleiste verlaufenden Schenkel Lötfahnen aufweisen. Ferner sollte die Kohleleiste im Bereich der Lötfahne metallisiert wie verkupfert sein, um eine sichere Verbindung herzustellen.

Schließlich ist erfindungsgemäß vorgesehen, dass zwischen dem Kanal der Kohleleiste und dem Profil ausgebildeter Hohlraum als Bruchdetektor ausgebildet ist oder einen solchen enthält.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: einen Querschnitt durch ein Schleifstück mit einer ersten Ausführungsform eines Trägers,
- Fig. 2: einen Querschnitt durch ein Schleifstück mit einer zweiten Ausführungsform eines Trägers und
- Fig. 3: eine weitere Ausgestaltung eines Trägers.

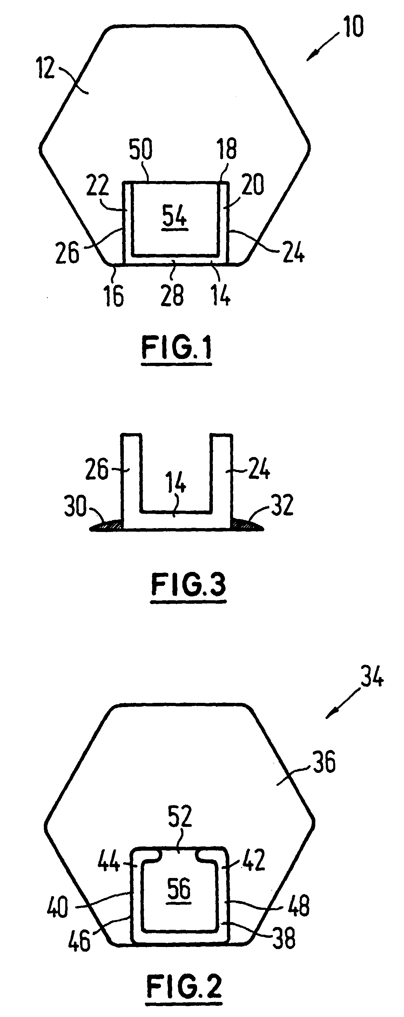

In Fig. 1 ist ein Querschnitt eines Schleifstücks 10 insbesondere bestimmt für Stromabnehmer für elektrische Schienenfahrzeuge dargestellt, der eine Kohleleiste 12 und einen Träger 14 umfasst. Die Kohleleiste besteht aus einem üblichen für Stromabnehmer geeigneten Kohlewerkstoff und kann durch Strangpressen oder Extrudieren hergestellt sein. Dabei ist die Außengeometrie der Kohleleiste 12 auf den jeweiligen Einsatzzweck ausgerichtet.

Die Kohleleiste 12 weist von ihrer Bodenfläche 16 ausgehend einen im Ausführungsbeispiel im Querschnitt rechteckförmigen Kanal 18 auf, innerhalb dessen der Träger 14 in Form eines U-Profils verläuft. Dabei weist der Kanal 18 in Bezug auf seine Längsseitenwände 20, 22 einen lichten Abstand auf, der dem Abstand der Außenfläche der Seitenschenkel 24, 26 des U-Profils entspricht, sofern das U-Profil 14 zum Kanalboden 50 hin geöffnet ist. Des Weiteren verläuft das U-Profil 14 mit einem Schenkel wie insbesondere seinem Querschenkel 28 außenseitig bündig oder nahezu bündig zur Bodenfläche 16 der Kohleleiste 12.

Die Längsseitenwandungen 20, 22 des Kanals 18 der Kohleleiste 12 können eine Metall- wie Kupferschicht aufweisen, die durch Galvanisieren oder Spritzen aufgebracht ist.

Der Träger 14 kann durch Kleben, Löten oder Schweißen mit der Kohleleiste 12 verbunden sein. Hierzu können gegebenfalls vom Querschenkel 14 entsprechend der Fig. 3 Lötfahnen 30, 32 ausgehen und seitlich über die Seitenschenkel 24, 26 vorstehen und mit längsrandseitigen Begrenzungen des Kanals 18 der Bodenfläche 16 durch z. B. Ultraschallschweißen verbunden werden. Im Bereich der Lötfahnen 30, 32 sollten die Randbereiche des Bodens 16 metallisiert wie verkupfert sein.

Nach dem Ausführungsbeispiel der Fig. 2 ist ein Schleifstück 34 mit einer Kohleleiste 36 und einem Träger 38 in Form eines C-Profils dargestellt, welches ebenfalls in einem bodenseitig offenen und im Schnitt rechteckförmigen Kanal 40 eingebracht ist. Der lichte Abstand der Längsseitenwandungen 42, 44 des Kanals 40 entspricht dabei dem Abstand zwischen den Außenflächen der Seitenschenkel 46, 48 des Trägers 38 in Form des C-Profils. Auch kann entsprechend dem Ausführungsbeispiel der Fig. 1 und 3 das C-Profil 38 mit der Kohleleiste 36 verklebt, verschweißt oder insbesondere durch Ultraschallschweißen verbunden sein.

Dadurch, dass aufgrund der erfindungsgemäßen Lehre der Träger 14, 38 eine Umhüllende mit Seitenbegrenzungen eines Abstands aufweist, der gleich dem lichten Abstand der Innenwandungen 20, 22 bzw. 42, 44 der Kanäle 18, 40 ist, ist ein problemloses Zusammensetzen von Kohleleiste 12, 36 und Träger 14, 38 möglich, und zwar durch Hineindrücken des Trägers 14, 38 in den Kanal 18, 40 bzw. Aufdrücken der Kohleleiste 12, 36 auf den Träger 14, 38.

Zwischen den aufeinanderliegenden Flächen der Kanalseitenwandungen 20, 22, 42, 44 und den Schenkeln 24, 26, 46, 48 der Träger 14, 38 kann in gewohnter Weise eine Metallschicht wie Kupferschicht verlaufen, um einen besonders guten elektrisch leitenden Übergang zwischen der Kohleleiste 12, 36 und dem Träger 14, 38 sicherzustellen.

Sind in den Ausführungsbeispielen die Träger 14, 38 mit ihrem offenen Schenkel auf die jeweilige kopfseitige Innenwandung 50, 52 des Kanals 18, 40 ausgerichtet, so kann jedes Profil 14, 38 um 90° in seiner Längsrichtung versetzt angebracht werden, da hierdurch nach wie vor der Kanal 18, 40 bodenseitig verschlossen ist. Um diese Möglichkeit zu bieten, ist das Profil 14, 38 von einer Umhüllenden umgeben, deren Querschnitt einem Quadrat entspricht.

Der zwischen dem Kanal 18, 40 und dem Profil 14, 38 ausgebildete Hohlraum 54, 56 kann die Funktion eines Bruchdetektors ausüben oder einen solchen enthalten. Auch können in dem kanalförmigen Raum 54, 56 Leitungen oder sonstige Elemente wie Sensoren verlegt werden, die von Schleifstücken bekannt sind.

## Patentansprüche

1. Schleifstück (10, 34) für Stromabnehmer, umfassend einen langgestreckten Träger (14, 38) sowie eine von diesem abgestützte langgestreckte Kohleleiste (12, 36) mit bodenseitig offenem Kanal (18, 40), in dem der Träger eingebracht ist, der ein U-Profil (14) oder ein C-Profil (38) vorzugsweise aus Metall ist mit einem offenen Schenkel, der von einer Innenfläche (50, 52) des im Schnitt insbesondere rechteckförmigen Kanals (18, 40) verschlossen ist, und einem geschlossenen von der Kohleleiste unbedeckten Schenkel,
**dadurch gekennzeichnet,**
dass das Profil (14, 38) mit seinem von der Kohleleiste (12, 26) unbedeckten Schenkel bündig oder im Wesentlichen bündig zur bodenseitigen Fläche der Kohleleiste verläuft.

2. Schleifstück nach Anspruch 1,
**dadurch gekennzeichnet,**
dass das Profil (14, 38) mit der Kohleleiste (12, 36) durch Ultraschallschweißen verbunden ist.

3. Schleifstück nach Anspruch 1,
**dadurch gekennzeichnet,**
dass das Profil (14, 38) mit der Kohleleiste (12, 36) durch Kleben, Löten oder Schweißen verbunden ist.

4. Schleifstück nach zumindest einem der vorhergehenden Ansprüche,
**dadurch gekennzeichnet,**
dass das Profil (14) in seinem bündig oder nahen bündig zur bodenseitigen Fläche der Kohleleiste (12) verlaufenden Schenkel (28) Lötfahnen (30, 32) aufweist.

5. Schleifstück nach Anspruch 4,
**dadurch gekennzeichnet,**
dass die Kohleleiste (12) zumindest im Bereich der Lötfahnen (30, 32) metallisiert wie verkupfert ist.

6. Schleifstück nach zumindest einem der vorhergehenden Ansprüche,
**dadurch gekennzeichnet,**
dass zwischen dem Kanal (18, 40) der Kohleleiste (12, 36) und dem Profil (14, 38) ausgebildeter Hohlraum (54, 56) als Bruchdetektor ausgebildet ist oder einen solchen enthält.

7. Schleifstück nach Anspruch 1,
**dadurch gekennzeichnet,**
dass das Profil (14, 38) im Schnitt eine Rechteck- wie Quadratform aufweist.

8. Schleifstück nach zumindest einem der vorhergehenden Ansprüche,
**dadurch gekennzeichnet,**
dass in dem Kanal (18, 40) innenseitig eine elektrisch leitende Schicht ausgebildet oder aufgebracht ist.

9. Schleifstück nach zumindest einem der vorhergehenden Ansprüche,
**dadurch gekennzeichnet,**
dass die Schicht wie Kupferschicht galvanisch oder durch Spritzen aufgebracht ist.
